(19)

Europäisches Patentamt
European Patent Office
Office européen des brevets

(11) EP 3 319 199 A1

(12) EUROPEAN PATENT APPLICATION
published in accordance with Art. 153(4) EPC

(43) Date of publication:
09.05.2018 Bulletin 2018/19

(51) Int Cl.:
H02J 7/00 (2006.01)       H01M 10/44 (2006.01)
H01M 10/48 (2006.01)      H02J 3/32 (2006.01)

(21) Application number: 16817970.3

(22) Date of filing: 29.06.2016

(86) International application number:
PCT/JP2016/069281

(87) International publication number:
WO 2017/002862 (05.01.2017 Gazette 2017/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.06.2015 JP 2015130646

(71) Applicants:
• Kabushiki Kaisha Toshiba
Minato-ku
Tokyo 105-8001 (JP)

• Toshiba Energy Systems & Solutions
Corporation
Saiwai-ku
Kawasaki-shi
Kanagawa 2120013 (JP)

(72) Inventors:
• ISOGAI, Taichi
Tokyo 105-8001 (JP)
• ISONO, Eri
Tokyo 105-8001 (JP)

(74) Representative: Awapatent AB
Junkersgatan 1
582 35 Linköping (SE)

(54) STORAGE BATTERY MANAGEMENT SYSTEM

(57) Provided is a stable storage battery management system which manages storage battery systems employing the same structure, re-calculates a rating of the storage battery management system when detecting a status change in storage battery system that affects the rating of the storage battery management system, and notifies a higher rank system of the re-calculation result. A storage battery management system 10 includes a plurality of storage battery systems 20 employing the same structure. The storage battery management system 10 controls charging and discharging of the storage battery system 20 in accordance with a charging and discharging command value from a higher rank system S01. A rating holding unit 112 of the storage battery management system 10 holds the chargeable and dischargeable amounts and the storage battery status of the storage battery system 20 beforehand. A storage battery status determining unit 113 compares the storage battery status held in the rating holding unit 112 with a newly received storage battery status. A rating calculating unit 114 re-calculates the chargeable and dischargeable amounts of the storage battery system 20 when the storage battery status determining unit 113 detects a new change in the storage battery status, and calculates the chargeable and dischargeable amounts of the entire storage battery management system based on the re-calculated chargeable and dischargeable amounts.

FIG. 1

**Description**

FIELD

Embodiments of the present disclosure relate to a storage battery management system that manages a control command output by a plurality of protective control devices in a power system.

BACKGROUND

In recent years, from the standpoint of global environment protection, natural energy, such as solar power generation and wind power generation, is actively introduced, and even general power consumers are starting to use such natural energy by installation of solar panels. Since the power generation by natural energy depends on the climate and the weather, etc., it is an unstable power generation in comparison with thermal power generation and water power generation which have been utilized in the various situation so far. In order to address such instability, charge and discharge of storage batteries are expected to compensate a change in power generation by natural energy. In addition, since power demand is always changing, the output of the thermal power generation and the output of the water power generation are adjusted by what corresponds to such a change, but when storage batteries bear a part of such an output adjustment, the thermal power generation and the water power generation can further stably and efficiently generate power. In view of the foregoing, it is expected that introduction of storage battery and increase of the capacity thereof further advances.

When utilization of such storage batteries is assumed, a scheme, in which commands are output from a system monitoring the change in power generation by natural energy or a system monitoring a balance of power demand and power supply in a higher rank of the power system to a system managing and controlling the storage battery, and in which charging and discharging of the storage battery system is performed based on the output command, is expected. When the storage batteries are utilized in this way, a control that follows a command from a further higher rank as much as possible is necessary.

CITATION LIST

PATENT LITERATURES

Patent document 1: JP H10-322924 A

SUMMARY

When the storage battery systems all employ the same structure, and gives the same control, it is expected that all State Of Charges (SOCs: remaining battery level) become consistent. When, however, the system is operated for a long period, even if the same control is given, the SOCs among the storage battery systems may become unbalanced due to slight control timing difference, temperature difference, and individual difference, etc. In such a case, one storage battery system may have the power storage amount remaining, while another storage battery system has the power storage amount of zero when viewed from the storage battery management system. In contrast, one storage battery system may have leeway for charging, while another storage battery system is fully charged and is not able to be charged any more. When such a situation occurs, and when the higher rank system determines that charging and discharging is still enabled at a rating, expected charging and discharging power may be not achieved when charging and discharging commands are given to actual storage batteries, and such a control by the storage battery management system may disrupt a system stabilization.

Embodiments of the present disclosure are to address such technical problems, and an objective is to provide, for a storage battery management system which manages a system of storage battery systems employing the same structure, a stable storage battery management system which re-calculates a rating of the storage battery management system when detecting a status change in storage battery system that affects the rating of the storage battery management system, and which notifies the re-calculation result to a higher rank system.

A storage battery management system according to an embodiment of the present disclosure includes a plurality of storage batteries, and controls charging and discharging of the storage batteries in accordance with a charging and discharging command value from a higher rank system, in which the storage battery management system further includes:

a rating holding unit obtaining chargeable and dischargeable amounts and a storage battery status of the storage battery prior to an operation of the storage battery management system, and holding the chargeable and dischargeable amounts and the storage battery status;

a storage battery status receiving unit newly obtaining a status of the storage battery after the operation of the storage battery management system is started;

a storage battery status determining unit making a determination by comparing the storage battery status held by the rating holding unit with the newly obtained status of the storage battery;

a rating calculating unit re-calculating the chargeable and dischargeable amounts of the storage battery when the storage battery status determining unit determines that there is a change in the storage battery status, and calculating chargeable and dischargeable amounts of the entire storage battery management system based on the re-calculated chargeable and dischargeable amounts; and

a rating transmitting unit transmitting, to the higher rank system, a rating of the storage battery management system that is the calculated chargeable and dischargeable amounts of the entire storage battery management system.

BRIEF DESCRIPTION OF DRAWINGS

FIG. 1 is a block diagram illustrating a structure of a storage battery management system according to a first embodiment;

FIG. 2 is a block diagram illustrating a structure of a higher rank system according to the first embodiment;

FIG. 3 is a block diagram illustrating a structure of the storage battery management system according to the first embodiment;

FIG. 4 is a diagram illustrating an example rating held in a rating holding unit according to the first embodiment;

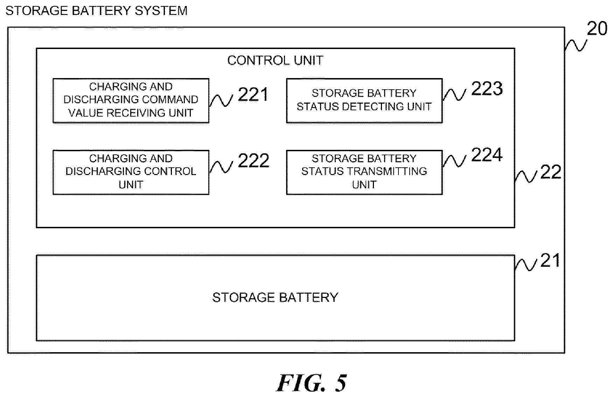

FIG. 5 is a block diagram illustrating a structure of a storage battery system according to the first embodiment;

FIG. 6 is a flowchart illustrating an operation of the storage battery management system according to the first embodiment;

FIG. 7 is a block diagram illustrating a structure of a storage battery management system according to a second embodiment;

FIG. 8 is an exemplary diagram illustrating how a command value adjusting unit adjusts charging and discharging command values according to the second embodiment;

FIG. 9 is an exemplary diagram illustrating how the command value adjusting unit adjusts the charging and discharging command values according to the second embodiment; and

FIG. 10 is a flowchart illustrating an operation of the storage battery management system according to the second embodiment.

DETAILED DESCRIPTION

Storage battery management systems according to the embodiments of the present disclosure will be described with reference to the figures.

[1. First Embodiment]

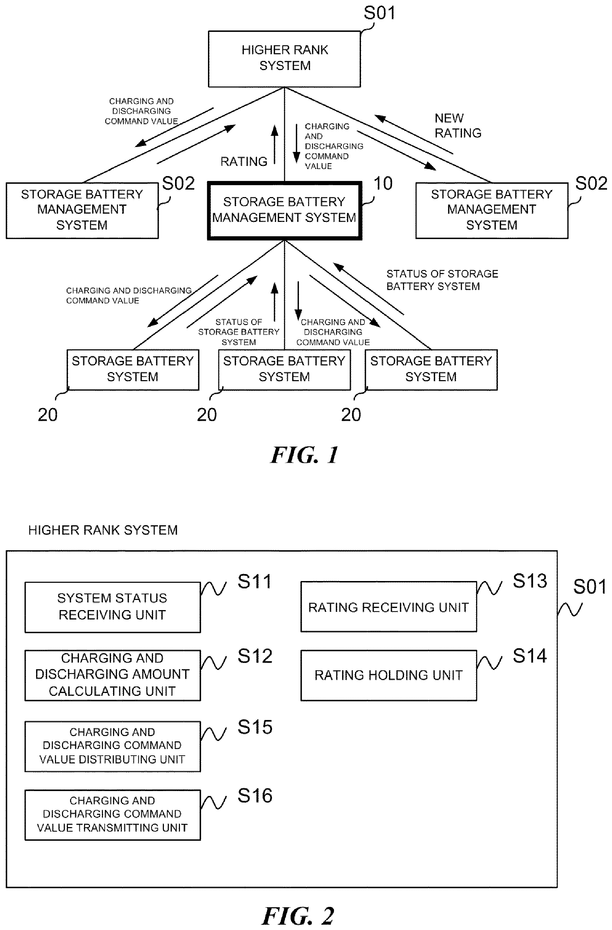

A storage battery management system according to a first embodiment in the embodiments will be described below with reference to FIG. 1 to FIG. 4. The storage battery management system according to this embodiment includes a plurality of storage battery systems that employ the same structure, and distributes charging and discharging command values received from a higher rank system provided at the higher rank stabilizing a power system to the lower rank storage battery systems. The storage battery management system monitors the status of the lower rank storage battery systems, and notifies the higher rank system the rating that can be output by the storage battery management system in accordance with a change in status.

FIG. 1 is a block diagram illustrating a structure of the storage battery management system of this embodiment. The storage battery management system of this embodiment will be described in detail with reference to FIG. 1. The storage battery management system of this embodiment includes following devices (a) to (c).

(a) A higher rank system S01 which monitors power demand and supply balance in a power system, and which outputs charging and discharging command values to a lower rank storage battery management system to maintain the balance when power demand and supply are unbalance.

(b) A storage battery management system 10 which distributes the charging and discharging command values received from the higher rank system to lower rank storage battery systems 20, monitors the status of the lower rank storage battery system 20, and notifies the higher rank system of the rating of the storage battery management system based on the monitoring result.

(c) The storage battery systems 20 which perform discharging and charging based on the charging and discharging command values received from the storage battery management system 10.

(Higher rank System)

The higher rank system S01 is a computer that includes a microprocessor and a memory. The higher rank system S01 achieves a system status receiving unit S11, a charging and discharging amount calculating unit S12, a rating receiving unit S13, a rating holding unit S14, a charging and discharging command value distributing unit S15, and charging and discharging command value transmitting unit S16 by a CPU that runs predetermined computer programs stored in the memory.

The system status receiving unit S11 receives the system status that indicates the status of the power system. Example system statuses are the voltage and frequency of the power system. There are various schemes for measuring the voltage and frequency of the power system, and for example, the voltage and the frequency are measured by sensors provided in the power system. The system status is input to the system status receiving unit S11 at a constant cycle.

The charging and discharging amount calculating unit S12 calculates, when there is a change in the system status, the charging and discharging power that cancels such a change. When, for example, solar light intensity to a solar power generator in the power system which the higher rank system S01 is connected to decreases, the output by this solar power generator instantaneously decreases. The charging and discharging amount calculating unit S12 detects the decrease of the output of the solar power generator from a change in the system status, and calculates the discharging amount that compensates the decrease by the solar power generator. In contrast, when the solar light intensity to the solar power generator in the power system increases, the output by this solar power generator instantaneously increases. The charging and discharging amount calculating unit S12 detects the increase of the output of the solar power generator from a change in the system status, and calculates the charging amount that absorbs the increase by the solar power generator.

The rating receiving unit S13 receives the rating of the storage battery management system output by the plurality of the lower rank storage battery management systems. The rating is a value that indicates the discharging amount that can be output by the storage battery management system, and the charging amount that can be stored in the storage battery management system. The received rating is held by the rating holding unit S14.

The charging and discharging command value distributing unit S15 distributes the calculated charging and discharging amounts based on the rating of the lower rank storage battery management system. The distributed charging and discharging command value is transmitted by the charging and discharging command value transmitting unit S16 to each storage battery management system.

(Storage Battery Management System)

The storage battery management system 10 distributes the charging and discharging command value received from the higher rank system S01 to the storage battery systems 20 under the control, monitors the status of the storage battery system 20 under the control, and notifies the higher rank system S01 of the rating of the storage battery management system 10 based on the monitoring result. The storage battery management system 10 is connected to the higher rank system S01 and a plurality of the storage battery systems 20.

The storage battery management system 10 is a computer that includes a CPU and a memory. The storage battery management system 10 causes the CPU to execute predetermined computer programs stored in the memory, and achieves a command value receiving unit 101, a command value distributing unit 102, a command value transmitting unit 103, a storage battery status receiving unit 111, a rating holding unit 112, a storage battery status determining unit 113, a rating calculating unit 114, and a rating transmitting unit 115.

The command value receiving unit 101 receives the charging and discharging command value transmitted by the higher rank system S01.

The command value distributing unit 102 distributes the received charging and discharging command value to the storage battery systems 20 under the control. In this embodiment, the plurality of the storage battery systems 20 employing the same structure are provided under the control of the storage battery management system 10. Hence, as for the distributing method of the charging and discharging command value, the charging and discharging command value is equally divided by the number of storage battery systems 20. In addition, when the chargeable and dischargeable outputs of the storage battery systems 20 under the control differ, as for the distributing method, the distribution amount of the charging and discharging command value is divided in accordance with the chargeable and dischargeable outputs, not by equally dividing by the number of storage battery systems 20.

The command value transmitting unit 103 transmits the charging and discharging command value distributed to each storage battery system 20.

The storage battery status receiving unit 111 receives the storage battery status that indicates the status of each of the storage battery system 20 from the storage battery system 20 under the control at a constant cycle. The storage battery status is, for example, a barometer that indicates the status of the storage battery system 20. The barometer that indicates the status of the storage battery system 20 is "normal operation status", "zero battery remaining level", and "zero discharging capacity", and "normal operation status" indicates the chargeable and dischargeable status. The chargeable and dischargeable amount of the storage battery system 20 in this case can be calculated based on the SOC of the storage battery system. "Zero battery remaining level" indicates that discharging is not enabled, and "zero discharging capacity" indicates that charging is not enabled.

The rating holding unit 112 is a part of the memory area of the memory in the storage battery management system 10, and stores the present rating of the storage battery management system 10 in association with the chargeable and dischargeable amounts and the storage battery status of each storage battery system 20 which are the basis for calculating the rating. The rating of the storage battery management system 10 is defined by chargeable amounts and dischargeable amounts.

As for the present rating of the storage battery management system 10, the chargeable and dischargeable amounts the storage battery status of the storage battery management system 10 both obtained prior to the operation of the storage battery management system 10 are held. In addition, after the operation of the storage battery management system 10 starts, every time the chargeable and dischargeable amounts and the storage battery status held by the chargeable and dischargeable amounts and the storage battery status rating holding unit 112 are updated every time the chargeable and dischargeable amounts and the rating holding unit 112 are updated.

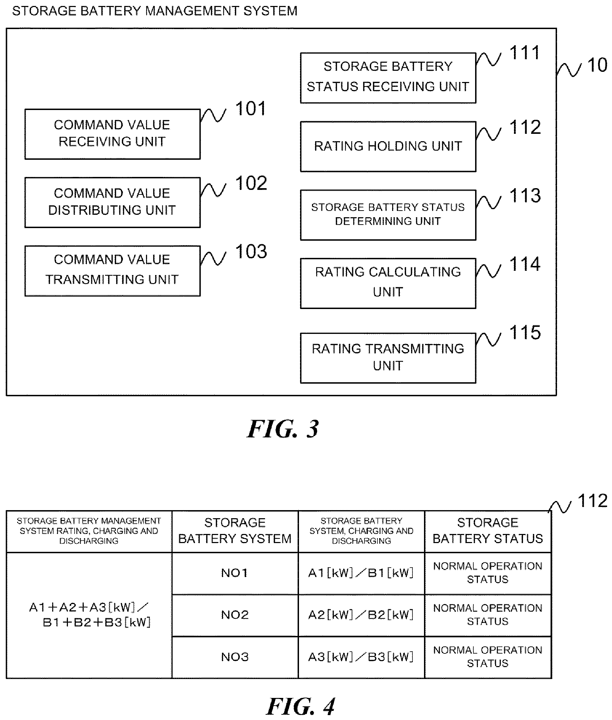

FIG. 4 is a diagram illustrating an example storage battery management system 10 that stores the rating in the storage battery status receiving unit 111. As illustrated in FIG. 4, as for the rating of the storage battery management system 10, a chargeable output of A1 + A2 + A3 [kW] and a dischargeable output of B1 + B2 + B3 [kW] are stored. The rating of this storage battery management system 10 is the total of the chargeable and dischargeable outputs of each storage battery systems 20 (NO1 to NO3). In addition, the "normal operation status" is stored as the storage battery status that is the basis of the charging and discharging rating output of each storage battery system 20.

At this time, since the charging and discharging command value to each battery systems 20 is divided in accordance with the output, when the higher rank system S01 transmits the discharging command X [kW] to the storage battery management system 10, the command value to each storage battery system 20 is distributed as follows.

$$NO1:\ X[kW]\ \times\ A1/(A1\ +\ A2\ +\ A3)\ [kW]$$

$$NO2:\ X[kW]\ \times\ A2/(A1\ +\ A2\ +\ A3)\ [kW]$$

$$NO3:\ X[kW]\ \times\ A3/(A1\ +\ A2\ +\ A3)\ [kW]$$

Likewise, when the charging command of Y [kW] is transmitted to the storage battery management system 10 from the higher rank system S01, the distribution is as follows.

$$NO1:\ Y[kW]\ \times\ B1/(B1\ +\ B2\ +\ B3)\ [kW]$$

$$NO2:\ Y[kW]\ \times\ B2/(B1\ +\ B2\ +\ B3)\ [kW]$$

$$NO3:\ Y[kW]\ \times\ B3/(B1\ +\ B2\ +\ B3)\ [kW]$$

The storage battery status determining unit 113 compares the latest storage battery status received by the storage battery status receiving unit 111 with the storage battery status already held in the storage battery status receiving unit 111. The comparison is made based on whether or not the storage battery status is consistent. When consistent, determination that "storage battery status consistent" is made, and when not inconsistent, determination that "storage battery status inconsistent" is made.

The rating calculating unit 114 calculates the charging amount and the discharging amount that are the rating of the storage battery management system 10 based on the latest storage battery status when the storage battery status determining unit 113 determines "storage battery status inconsistent". For example, it is assumed that the conventional storage battery status of the storage battery system 20 (NO1 to NO3) is the following (a) to (c).

(a) Battery system 20 (NO1) "normal operation status".
(b) Battery system 20 (NO2) "normal operation status".
(c) Battery system 20 (NO3) "normal operation status".

In contrast, it is assumed that the latest storage battery status of the battery system 20 (NO1 to NO3) is the following (d) to (f).

(d) Battery system 20 (NO1) "normal operation status".
(e) Battery system 20 (NO2) "normal operation status".
(f) Battery system 20 (NO3) "zero discharging capacity".

In such a situation, the storage battery status determining unit 113 determines "storage battery status inconsistent". The rating calculating unit 114 calculates the dischargeable output that is A1 + A2 as the rating of the storage battery management system 10 based on the storage battery statuses of (d) to (f) upon the determination as "storage battery status inconsistent.". Next, the calculated new rating of the storage battery management system 10 is held in the rating holding unit 112.
The rating transmitting unit 115 transmits the new rating to the higher rank system S01 when the details held by the rating holding unit 112 changes.

(Storage Battery System)

The storage battery system 20 includes storage batteries 21 and a control unit 22. The storage battery system 20 is connected to the storage battery management system 10.
The storage batteries 21 are formed by connecting cells having electrodes and an electrolyte. The storage battery is, for example, a lithium ion battery, a lead storage battery, a nickel and hydrogen storage battery, sodium and sulfur storage battery, etc.
The control unit 22 is a computer that includes a microprocessor and a memory. The control unit 22 causes a CPU to execute predetermined computer program stored in the memory to achieve a charging and discharging command value receiving unit 221, a charging and discharging control unit 222, a storage battery status detecting unit 223, and a storage battery status transmitting unit 224.
The charging and discharging command value receiving unit 221 receives the charging and discharging command value transmitted by the storage battery management system 10. The charging and discharging control unit 222 controls the storage battery 21 to charge and discharge based on the received charging and discharging command value.
The storage battery status detecting unit 223 detects the status of the storage battery 21. The storage battery status detecting unit 223 detects the SOC of the storage battery 21, and selects the barometer that indicates the status of the storage battery 21 based on the detected SOC. As described above, the barometer that indicates the status of the storage battery 21 are "normal operation status", "zero battery remaining level", or "zero discharging capacity". The barometer that indicates the status of the storage battery is transferred to the storage battery status transmitting unit 224 as the storage battery status.
The storage battery status transmitting unit 224 transmits the storage battery status to the storage battery management system 10.

[1-2. Action]

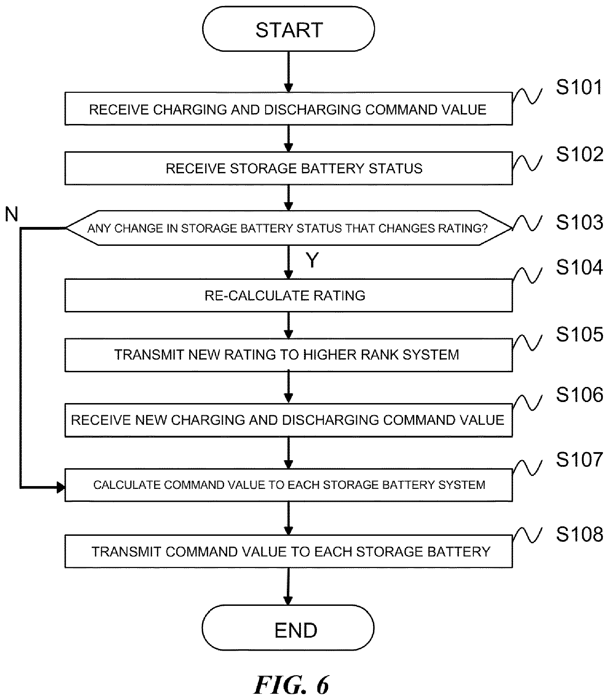

The operation of the storage battery management system that employs the above structure according to this embodiment will be described. FIG. 6 is a flowchart that illustrates the operation of the storage battery management system 10 according to this embodiment. In the following flowchart, it is assumed for explanation that the three storage battery management systems 10, S02, and S02 are provided in the higher rank system S01, and the plurality of the storage battery systems 20 are provided in single storage battery management system 10. The storage battery management system 10 according to this embodiment is one of the three storage battery management systems 10, S02, and S02 provided under the control of the higher rank system S01, and the three battery systems 20 (in this example, respective dischargeable outputs are 50 kW, 100 kW, and 150 kW) are provided under the control of the storage battery management system.
According to such a storage battery management system, the rating of the storage battery management system 10 is calculated beforehand prior to the operation, and the storage battery statuses of the storage battery systems 20 are detected in advance. As for the rating, the SOC of the storage battery system 20 is detected, and the rating is calculated based on the detected SOC. The storage battery status is detected by receiving the storage battery status transmitted by the storage battery system 20. The rating and the storage battery status are held in the rating holding unit 112.

When the storage battery management system 10 starts operating, the higher rank system S01 transmits the charging and discharging command value that is, for example, 300 [kW] discharge to the storage battery management system 10 under the control. The storage battery management system 10 receives the charging and discharging command value that is 300 [kW] discharge for the entire storage battery management system 10 (S101).

In addition, simultaneously with the reception of the charging and discharging command value from the higher rank system S01, the storage battery management system 10 receives the storage battery status transmitted by the storage battery systems 20 under the control thereof (S102). The received storage battery status is compared with the storage battery status held in the rating holding unit 112 by the storage battery status determining unit 113(S103).

Next, when there is no change that changes the rating of the storage battery management system 10 (S103: N), based on the received charging and discharging command value that is 300 [kW] discharge, the charging and discharging command value distributed to the storage battery systems 20 under the control is calculated (S107). In this case, since three battery systems 20 are provided under the control of the storage battery management system 10, the charging and discharging command value to the storage battery systems 20 are calculated from the following [formula 1].

[Formula 1]

$$300 \ [kW] \times 50 \ [kW]/(50 \ [kW] + 100 \ [kW] + 150 \ [kW])$$
$$= 50 \ [kW].$$
$$300 \ [kW] \times 100 \ [kW]/(50 \ [kW] + 100 \ [kW] + 150 \ [kW])$$
$$= 100 \ [kW].$$
$$300 \ [kW] \times 150 \ [kW]/(50 \ [kW] + 100 \ [kW] + 150 \ [kW])$$
$$= 150 \ [kW] \qquad (1)$$

Next, the 50 [kW], 100 [kW], and 150 [kW] discharges calculated as the charging and discharging command value are transmitted to the respective storage battery systems 20 (S108).

In contrast, as described above, when the storage battery status of the storage battery system 20 (NO3) under the control is changed to from "normal operation status" to "zero discharging capacity", a determination that there is a change that changes the rating of the storage battery management system 10 is made (S103: Y). Next, the rating of the storage battery management system 10 is re-calculated based on the new storage battery status(S104). When any of the storage battery status of the storage battery systems 20 under the control is "zero discharging capacity", the rating of the storage battery management system 10 is calculated as 50 [kW] + 100 [kW] = 150 [kW]. Next, the newly calculated 150 kW discharge rating is transmitted to the higher rank system S01 (S105).

The newly calculated 150 kW discharge rating is transmitted to the higher rank system S01. The higher rank system S01 calculates the charging and discharging command value of the storage battery management system 10 based on the new rating of the storage battery management system 10, and transmits the new charging and discharging command value that is 0 discharge to the storage battery management system 10. The storage battery management system 10 receives the new charging and discharging command value that is 150 [kW] discharge (S106).

Next, based on the new charging and discharging command value, the charging and discharging command value that is 0 discharge is calculated for each storage battery system 20, and the command values that are 50 [kW], 100 [kW], and 0 [kW] discharges are transmitted to the respective storage battery systems (S107, S108).

[1-3. Effect]

According to this embodiment that employs the above structure and action, the following effects can be achieved.

(1) In the higher rank system S01, the actual rating of the storage battery management system 10 can be grasped, enabling a control of an output of the charging and discharging command value that instructs the battery systems 20 with zero power storage capacity to discharge, and an output of the charging and discharging command value that instructs the storage battery system 20 with zero charging capacity to charge. This enables the higher rank system S01 to perform charging and discharging as expected, contributing to a power system stabilization.

(2) According to this embodiment, although the storage battery status detecting unit 223 is provided in the storage battery system 20, the storage battery status detecting unit 223 may be provided in the storage battery management system 10. In this case, a thermometer and a voltmeter may be provided in the storage battery system 20, and in the storage battery management system 10, the SOC of the storage battery system 20 may be calculated, and the storage battery status of the storage battery systems 20 may be detected based on the calculated SOC. This enables a utilization of a conventional storage battery system without newly providing the storage battery system 20 that is compatible with the storage battery management system 10 of this embodiment.

(3) According to this embodiment, although the barometers "normal operation status", "zero battery remaining level", and "zero discharging capacity" have been set as the storage battery statuses, the storage battery status of the storage battery system is not limited to them. For example, the SOC detected in the storage battery system 20 may be applied instead of the barometer. When, for example, it is desirable to set the operation range of the storage battery system to be SOC 10% to 90 %, the storage battery system 20 that has the SOC reached to 10 % may be set to have 0 dischargeable output, and the storage battery management system 10 may be notified of this setting. In contrast, the storage battery system 20 that has the SOC which is 90 % may be set to have 0 chargeable output, and the storage battery management system 10 may be notified of this setting.

(4) According to the battery system 20 of this embodiment, the single storage battery is provided, but the present disclosure is not limited to this case. For example, a plurality of the storage batteries may be considered as a single set. In addition, the minimum unit (e.g., a storage battery cell) to handle the storage battery may be adopted. The scale of the battery system 20 is not limited to any particular scale.

(5) When a lithium ion battery, etc., is applied as the storage battery 21 of the storage battery system 20, since the charging and discharging near the full charging and near full discharge are performed in the CV (Constant Voltage) mode, not in the CC (Constant Current) mode, the chargeable and dischargeable outputs changes in accordance with the battery remaining level. The rating may be changed in accordance with such change points. In the CV mode, the storage battery management system 10 may have a table of the battery remaining level and the rating, and the rating may be changed at the storage-battery-management-system-10 side alone without a notification of the change of rating from the storage battery system 20 to the storage battery management system 10 every time the rating is changed.

(6) Still further, although the battery systems 20 are provided under the control of the storage battery management system 10 according to this embodiment, the plurality of the storage battery management systems that employ the same structure may be provided under the control of the higher rank system S01. In this case, the provided storage battery management system 10 manages the same storage battery systems 20 in the same number.

[2. Second Embodiment]

A storage battery management system according to a second embodiment will be described. According to the second embodiment, the battery remaining levels of the storage battery systems 20 under the control of the storage battery management system 10 are monitored, and when there is an unevenness in the battery remaining levels, a control is performed to reduce the unevenness in the battery remaining levels. The same structure as that of the first embodiment will be denoted by the same reference numeral, and the duplicated explanation thereof will be omitted.

[2-1. Structure]

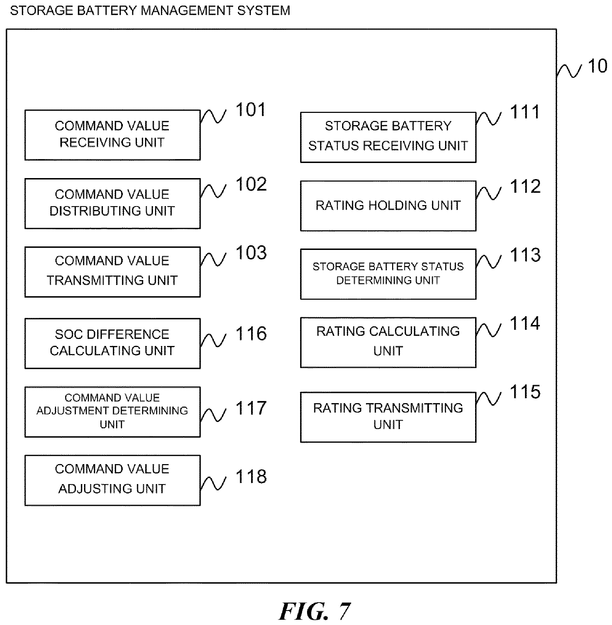

FIG. 7 is a block diagram illustrating a structure of the storage battery management system 10 according to this embodiment. In addition to the structure of the first embodiment, the storage battery management system includes an SOC difference calculating unit 116, a command value adjustment determining unit 117, and a command value adjusting unit 118.

The SOC difference calculating unit 116 calculates the difference in SOCs of each storage battery systems 20 under the control of the storage battery management system 10. The SOC of each storage battery system 20 received by an unillustrated SOC receiving unit is input to the SOC difference calculating unit 116. The SOC difference calculating unit 116 calculates the difference between the maximum value of the input SOC of the storage battery systems 20 and the minimum value thereof. This calculation result is transferred to the command value adjustment determining unit 117 as an SOC difference.

The command value adjustment determining unit 117 determines whether the SOC difference calculated by the SOC difference calculating unit 116 is equal to or less than a pre-set threshold or not. When the SOC difference is equal to or less than the threshold, a determination result "less than the threshold" is output, and when the SOC difference exceeds the threshold, a determination result "exceeding the threshold" is output. In addition, the threshold in the command value adjustment determining unit 117 can be set by a user via an unillustrated input interface.

When the command value adjustment determining unit 117 determines that the SOC difference is "exceeding the threshold", the command value adjusting unit 118 adjusts the charging and discharging command value to be transmitted by the storage battery management system 10 to the storage battery systems 20. As for the adjustment, the charging and discharging command value to the storage battery management system 10 is divided in accordance with the SOC value. In other words, when the charging and discharging command value is a command value for discharging, the command value adjusting unit 118 makes an adjustment such that the remaining level of respective storage batteries will be simultaneously zero when each of the storage battery systems 20 keeps discharging in accordance with the adjusted value, as a result of adjustment. In contrast, when the charging and discharging command value is a command value for charging, an adjustment is made such that the empty level of respective storage batteries will be simultaneously zero when each of the storage battery systems 20 keeps charging in accordance with the adjusted value, as a result of adjustment.

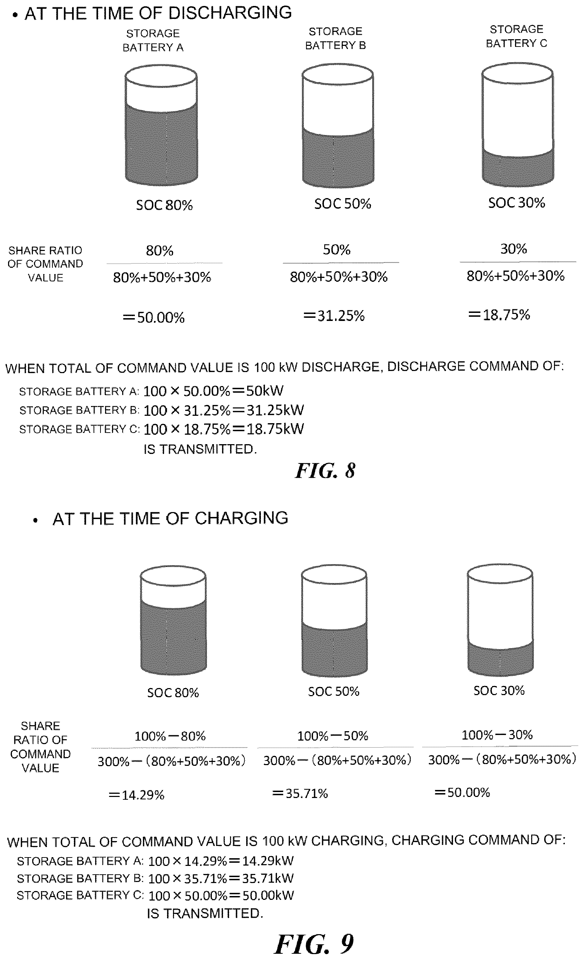

FIG. 8 is a diagram that illustrates a calculation method of the command value to the storage battery system 20 in the case the SOC value of the storage battery system 20 (NO1) is 80 %, the SOC value of the battery system 20 (NO2) is 50 %, and the SOC value of the storage battery system 20 (NO3) is 30 % when it is assumed that the charging and discharging command value to the storage battery management system 10 is 100 [kW] and all the battery systems 20 under the control of the storage battery management system 10 have the same capacity. In FIG. 8, the charging and discharging command value that is 100 [kW] is divided in accordance with the SOC values of the respective storage battery systems 20 (NO1 to 3).

That is, when the SOC value of the storage battery system 20 (NO1) is 80 %, the SOC value of the battery system 20 (NO2) is 50%, and the SOC value of the battery system 20 (NO3) is 30%, the division ratio is 50.00 % for the storage battery system 20 (NO1), 31.25 % for the storage battery system 20 (NO2), and 18.75 % for the storage battery system 20 (NO3).

By multiplying the charging and discharging command value 100 [kW] to the storage battery management system 10 by the division ratio of each storage battery system 20, the charging and discharging command values for the each storage battery systems 20 (NO 1-3) can be calculated as the following [formula 2].

[Formula 2]

$$
\begin{aligned}
&\text{Charging and discharging command value for the} \\
&\text{storage battery system 20 (NO1)} = 100 \times 50.00 = 50.00 \ [\text{kW}]. \\
&\text{Charging and discharging command value for the} \\
&\text{storage battery system 20 (NO2)} = 100 \times 31.25 = 31.25 \ [\text{kW}]. \\
&\text{Charging and discharging command value for the} \\
&\text{storage battery system 20 (NO3)} = 100 \times 18.75 = 18.75 \ [\text{kW}].
\end{aligned}
\tag{2}
$$

FIG. 9 is a diagram that illustrates a calculation method of the command value to the storage battery systems 20 in the case the SOC value of the storage battery system 20 (NO1) is 80 %, the SOC value of the storage battery system 20 (NO2) is 50 %, and the SOC value of the storage battery system 20 (NO3) is 30 % when the charging and discharging command value to the storage battery management system 10 is 100 [kW]. In FIG. 9, the charging and discharging command value that is 100 [kW] is divided in accordance with the respective (1 - SOC values) of the storage battery systems 20 (NO 1 to 3).

That is, when the SOC value of the storage battery system 20 (NO1) is 80 %, the SOC value of the storage battery system 20 (NO2) is 50%, and the SOC value of the storage battery system 20 (NO3) is 30%, the division ratio is 14.29 % for the storage battery system 20 (NO1), 31.7 % for the storage battery system 20 (NO2), and 50 % for the storage battery system 20 (NO3).

By multiplying the charging and discharging command value that is 100 [kW] to the storage battery management system 10 by the division ratio of each storage battery system 20, the charging and discharging command values for the each storage battery systems 20 (NO 1 to 3) can be calculated as the following [formula 3].

[Formula 3]

```
        Charging and discharging command value for the
storage battery system 20 (NO1) = 100 × 14.29 = 14.29 [kW].
        Charging and discharging command value for the
storage battery system 20 (NO2) = 100 × 35.71 = 35.71 [kW].
        Charging and discharging command value for the
storage battery system 20 (NO3) = 100 × 50.00 = 50.00 [kW]
    (3)
```

The charging and discharging command value adjusted by the command value adjusting unit 118 is transferred to the command value transmitting unit 103. The command value transmitting unit 103 transmits the adjusted charging and discharging command value to each storage battery system 20.

[2-2. Action]

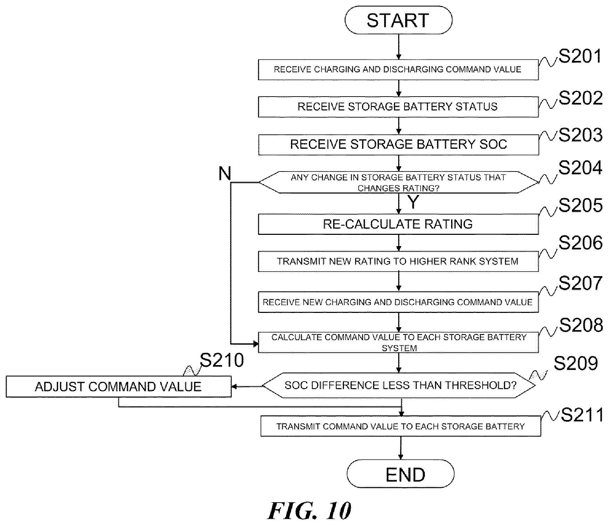

The operation of the storage battery management system that employs the above structure according to this embodiment will be described. FIG. 10 is a flowchart that illustrates the operation of the storage battery management system 10 according to this embodiment. In the following flowchart, a step S203 that receives the SOC of the battery system 20, a step S209 that determines whether the SOC difference is equal to or less than the threshold or not, and a step S210 that adjusts the command value are added to the operation of the above embodiment. Also in FIG. 10, like the above embodiment, the three storage battery management systems 10, S02, and S02 are provided in the higher rank system S01, and the plurality of the storage battery systems 20 is provided to the single storage battery management system 10, for the purpose of explanation. The storage battery management system according to this embodiment is one of the three storage battery management systems 10, S02, and S02 provided under the control of the higher rank system S01, and the three battery systems 20 are provided under the control thereof.

When the storage battery management system 10 starts operating, the storage battery management system 10 receives the charging and discharging command value that is 100 [kW] discharge for the entire storage battery management system 10 (S201). In addition, the storage battery status and the SOC of the storage battery system 20 are received (S202, S203). It is assumed that the received SOC value of the storage battery system 20 is 80 % for the storage battery system 20 (NO1), 50 % for the storage battery system 20 (NO2), and 30 % for the storage battery system 20 (NO3).

The received storage battery status is compared with the storage battery status held in holding unit 112 by the storage battery status determining unit 113 (S203). Next, a determination on the presence of the status change of the storage battery system 20 that affects the rating of the storage battery management system 10 is made, and the charging and discharging command value to each storage battery system 20 is calculated (S204 to S208).

Here, when the received SOC difference of the storage battery systems 20 is equal to or less than the threshold (S209: Y), the charging and discharging command value calculated in the step S208 is transmitted to each storage battery system 20 (S211).

In contrast, when the received SOC difference of the storage battery systems 20 exceeds the threshold (S209: N), the command value adjusting unit 118 adjusts the command value (S210). That is, the charging and discharging command value that is 100 [kW] discharge for the entire storage battery management system 10 is divided in accordance with the SOC value of each storage battery system 20 (NO 1 to 3), and the adjusted command value that is a discharge command value of 50 [kW] for the storage battery system 20 (NO1), a discharge command value of 31.25 [kW] for the storage battery system 20 (NO1), and a discharge command value of 18.75 [kW] for the storage battery system 20 (NO1) is calculated. Next, the calculated charging and discharging command value is transmitted to each storage battery system 20 (S211).

When the capacity of the storage battery system 20 differs, the command value may be divided as indicated by the following [formula 4]. When the charging and discharging command value from the higher rank system S01 is Z [kW], the capacity of the storage battery system 20 (NO1) is C1 and the SOC is SOC1, the capacity of the storage battery system 20 (NO2) is C2 and the SOC is SOC2, and the capacity of the storage battery system 20 (NO3) is C3 and the SOC is SOC3, the charging and discharging command value to the storage battery systems 20 (NO1 to NO3) is calculated as the following [formula 4].

[Formula 4]

Charging and discharging command value for the storage battery system 20 (NO1) = Z × C1 × SOC1/(C1 × SOC1 + C2 × SOC2 + C3 × SOC3) [kW].

Charging and discharging command value for the storage battery system 20 (NO2) = Z × C2 × SOC2/(C1 × SOC1 + C2 × SOC2 + C3 × SOC3) [kW].

Charging and discharging command value for the storage battery system 20 (NO3) = Z × C3 × SOC3/(C1 × SOC1 + C2 × SOC2 + C3 × SOC3) [kW].          (4)

[2-3. Effect]

According to this embodiment that employs the above structure and action, in addition to the effects of the above embodiment, the following effects can be achieved.

By adjusting the charging and discharging command value to the storage battery systems 20, the SOC values of each storage battery systems 20 can be maintained further evenly, reducing an occasion that only certain storage battery system 20 becomes fully charged or fully discharged.

However, in any of the above cases, when the distributed command value is greater than the dischargeable output of the storage battery system 20 and the chargeable output thereof, the command value that is up to the dischargeable output/chargeable output of the storage battery system 20 at the present time is set, and the value equivalent to the difference between the distributed command value and the dischargeable output/chargeable output is distributed to the other storage battery systems 20.

[3. Other Embodiments]

Several embodiments of the present disclosure have been described in this description, those embodiments are merely presented as examples, and are not intended to limit the scope of the present disclosure. More specifically, various omissions, replacements, and modifications can be made without departing from the scope of the present disclosure. Such embodiments and modified forms thereof are within the scope and spirit of the present disclosure, and are also within the scope of the invention as recited in the appended claims and the equivalent range thereto.

REFERENCE SIGNS LIST

S01 Higher rank system
S11 System status receiving unit
S12 Charging and discharging amount calculating unit
S13 Rating receiving unit
S14 Rating holding unit
S15 Charging and discharging command value distributing unit
S16 Charging and discharging command value transmitting unit
S02 Other storage battery management system
10 Storage battery management system
101 Command value receiving unit
102 Command value distributing unit
103 Command value transmitting unit
111 Storage battery status receiving unit
112 Rating holding unit
113 Storage battery status determining unit
114 Rating calculating unit

115 Rating transmitting unit
116 SOC difference calculating unit
117 Command value adjustment determining unit
118 Command value adjusting unit
20 Storage battery system
21 Storage battery
22 Control unit
221 Charging and discharging command value receiving unit
222 Charging and discharging control unit
223 Storage battery status detecting unit
224 Storage battery status transmitting unit

**Claims**

1. A storage battery management system comprising a plurality of storage batteries, and controlling charging and discharging of the storage batteries in accordance with a charging and discharging command value from a higher rank system, wherein the storage battery management system further comprises:

   a rating holding unit obtaining chargeable and dischargeable amounts and a storage battery status of the storage battery prior to an operation of the storage battery management system, and holding the chargeable and dischargeable amounts and the storage battery status;
   a storage battery status receiving unit newly obtaining a status of the storage battery after the operation of the storage battery management system is started;
   a storage battery status determining unit making a determination by comparing the storage battery status held by the rating holding unit with the newly obtained status of the storage battery;
   a rating calculating unit re-calculating the chargeable and dischargeable amounts of the storage battery when the storage battery status determining unit determines that there is a change in the storage battery status, and calculating chargeable and dischargeable amounts of the entire storage battery management system based on the re-calculated chargeable and dischargeable amounts; and
   a rating transmitting unit transmitting, to the higher rank system, a rating of the storage battery management system that is the calculated chargeable and dischargeable amounts of the entire storage battery management system.

2. The storage battery management system according to claim 1, wherein:

   the higher rank system outputs, to the storage battery management system, a charging and discharging command value in accordance with the rating of the storage battery management system output by the storage battery management system; and
   the storage battery management system further comprises:

      a command value receiving unit receiving the charging and discharging command value output by the higher rank system;
      a command value distributing unit distributing the received charging and discharging command value to the storage batteries under a control of the storage battery management system; and
      a command value transmitting unit transmitting, to the storage battery, the distributed charging and discharging command value.

3. The storage battery management system according to claim 1 or 2, wherein the storage battery status includes at least a status at which a discharging capacity is zero or a charging capacity is zero.

4. The storage battery management system according to claim 1 or 2, wherein the storage battery status is a status at which the storage battery is in a CC mode or a CV mode.

5. The storage battery management system according to any one of claims 2 to 4, wherein the command value distributing unit equally divides the charging and discharging command value output by the higher rank system by a number of the storage batteries, and distributes the divided charging and discharging command value.

6. The storage battery management system according to any one of claims 1 to 4, further comprising a command value adjusting unit unevenly distributing the charging and discharging command value output by the higher rank system.

7. The storage battery management system according to claim 6, further comprising:

a battery remaining level detecting unit detecting battery remaining levels of all the batteries under the control; and a battery remaining level difference calculating unit calculating a battery remaining level difference that is a difference between a maximum value of the detected battery remaining level and a minimum value thereof, wherein the command value adjusting unit unevenly distributes the charging and discharging command value when the battery remaining level difference exceeds a predetermined threshold.

8. The storage battery management system according to claim 6 or 7, wherein the command value adjusting unit distributes the charging and discharging command value divided by the battery remaining level of the storage battery or by chargeable and dischargeable outputs thereof.

S01

HIGHER RANK
SYSTEM

CHARGING AND
DISCHARGING
COMMAND VALUE

NEW
RATING

CHARGING
AND
DISCHARGING
COMMAND
VALUE

RATING

S02

STORAGE BATTERY
MANAGEMENT
SYSTEM

10

STORAGE BATTERY
MANAGEMENT SYSTEM

S02

STORAGE BATTERY
MANAGEMENT
SYSTEM

CHARGING AND DISCHARGING
COMMAND VALUE

STATUS OF STORAGE
BATTERY SYSTEM

STATUS OF
STORAGE BATTERY
SYSTEM

CHARGING AND
DISCHARGING
COMMAND VALUE

STORAGE BATTERY
SYSTEM

STORAGE BATTERY
SYSTEM

STORAGE BATTERY
SYSTEM

20

20

20

*FIG. 1*

HIGHER RANK SYSTEM

SYSTEM STATUS
RECEIVING UNIT

S11

RATING RECEIVING UNIT

S13

S01

CHARGING AND
DISCHARGING AMOUNT
CALCULATING UNIT

S12

RATING HOLDING UNIT

S14

CHARGING AND
DISCHARGING COMMAND
VALUE DISTRIBUTING UNIT

S15

CHARGING AND
DISCHARGING COMMAND
VALUE TRANSMITTING UNIT

S16

*FIG. 2*

STORAGE BATTERY MANAGEMENT SYSTEM

| COMMAND VALUE RECEIVING UNIT | ~ 101 | | STORAGE BATTERY STATUS RECEIVING UNIT | ~ 111 | ~ 10 |
| COMMAND VALUE DISTRIBUTING UNIT | ~ 102 | | RATING HOLDING UNIT | ~ 112 | |
| COMMAND VALUE TRANSMITTING UNIT | ~ 103 | | STORAGE BATTERY STATUS DETERMINING UNIT | ~ 113 | |
| | | | RATING CALCULATING UNIT | ~ 114 | |
| | | | RATING TRANSMITTING UNIT | ~ 115 | |

## FIG. 3

~ 112

| STORAGE BATTERY MANAGEMENT SYSTEM RATING, CHARGING AND DISCHARGING | STORAGE BATTERY SYSTEM | STORAGE BATTERY SYSTEM, CHARGING AND DISCHARGING | STORAGE BATTERY STATUS |
|---|---|---|---|
| A1+A2+A3[kW]／ B1+B2+B3[kW] | NO1 | A1[kW]／B1[kW] | NORMAL OPERATION STATUS |
| | NO2 | A2[kW]／B2[kW] | NORMAL OPERATION STATUS |
| | NO3 | A3[kW]／B3[kW] | NORMAL OPERATION STATUS |

## FIG. 4

STORAGE BATTERY SYSTEM

CONTROL UNIT

CHARGING AND DISCHARGING COMMAND VALUE RECEIVING UNIT — 221

STORAGE BATTERY STATUS DETECTING UNIT — 223

CHARGING AND DISCHARGING CONTROL UNIT — 222

STORAGE BATTERY STATUS TRANSMITTING UNIT — 224

— 20

— 22

STORAGE BATTERY — 21

*FIG. 5*

START

RECEIVE CHARGING AND DISCHARGING COMMAND VALUE — S101

RECEIVE STORAGE BATTERY STATUS — S102

ANY CHANGE IN STORAGE BATTERY STATUS THAT CHANGES RATING? — S103

N

Y

RE-CALCULATE RATING — S104

TRANSMIT NEW RATING TO HIGHER RANK SYSTEM — S105

RECEIVE NEW CHARGING AND DISCHARGING COMMAND VALUE — S106

CALCULATE COMMAND VALUE TO EACH STORAGE BATTERY SYSTEM — S107

TRANSMIT COMMAND VALUE TO EACH STORAGE BATTERY — S108

END

*FIG. 6*

STORAGE BATTERY MANAGEMENT SYSTEM

| | |
|---|---|
| COMMAND VALUE RECEIVING UNIT ⟋ 101 | STORAGE BATTERY STATUS RECEIVING UNIT ⟋ 111 |
| COMMAND VALUE DISTRIBUTING UNIT ⟋ 102 | RATING HOLDING UNIT ⟋ 112 |
| COMMAND VALUE TRANSMITTING UNIT ⟋ 103 | STORAGE BATTERY STATUS DETERMINING UNIT ⟋ 113 |
| SOC DIFFERENCE CALCULATING UNIT ⟋ 116 | RATING CALCULATING UNIT ⟋ 114 |
| COMMAND VALUE ADJUSTMENT DETERMINING UNIT ⟋ 117 | RATING TRANSMITTING UNIT ⟋ 115 |
| COMMAND VALUE ADJUSTING UNIT ⟋ 118 | |

*FIG. 7*

• AT THE TIME OF DISCHARGING

| STORAGE BATTERY A | STORAGE BATTERY B | STORAGE BATTERY C |
|---|---|---|

SOC 80%           SOC 50%           SOC 30%

| SHARE RATIO OF COMMAND VALUE | $\dfrac{80\%}{80\%+50\%+30\%}$ | $\dfrac{50\%}{80\%+50\%+30\%}$ | $\dfrac{30\%}{80\%+50\%+30\%}$ |
|---|---|---|---|
| | $=50.00\%$ | $=31.25\%$ | $=18.75\%$ |

WHEN TOTAL OF COMMAND VALUE IS 100 kW DISCHARGE, DISCHARGE COMMAND OF:

STORAGE BATTERY A: $100 \times 50.00\% = 50\text{kW}$
STORAGE BATTERY B: $100 \times 31.25\% = 31.25\text{kW}$
STORAGE BATTERY C: $100 \times 18.75\% = 18.75\text{kW}$
IS TRANSMITTED.

## FIG. 8

• AT THE TIME OF CHARGING

SOC 80%           SOC 50%           SOC 30%

| SHARE RATIO OF COMMAND VALUE | $\dfrac{100\%-80\%}{300\%-(80\%+50\%+30\%)}$ | $\dfrac{100\%-50\%}{300\%-(80\%+50\%+30\%)}$ | $\dfrac{100\%-30\%}{300\%-(80\%+50\%+30\%)}$ |
|---|---|---|---|
| | $=14.29\%$ | $=35.71\%$ | $=50.00\%$ |

WHEN TOTAL OF COMMAND VALUE IS 100 kW CHARGING, CHARGING COMMAND OF:
STORAGE BATTERY A: $100 \times 14.29\% = 14.29\text{kW}$
STORAGE BATTERY B: $100 \times 35.71\% = 35.71\text{kW}$
STORAGE BATTERY C: $100 \times 50.00\% = 50.00\text{kW}$
IS TRANSMITTED.

## FIG. 9

START

RECEIVE CHARGING AND DISCHARGING COMMAND VALUE — S201

RECEIVE STORAGE BATTERY STATUS — S202

RECEIVE STORAGE BATTERY SOC — S203

ANY CHANGE IN STORAGE BATTERY STATUS THAT CHANGES RATING? — S204

N

Y

RE-CALCULATE RATING — S205

TRANSMIT NEW RATING TO HIGHER RANK SYSTEM — S206

RECEIVE NEW CHARGING AND DISCHARGING COMMAND VALUE — S207

CALCULATE COMMAND VALUE TO EACH STORAGE BATTERY SYSTEM — S208

S210

ADJUST COMMAND VALUE ← SOC DIFFERENCE LESS THAN THRESHOLD? — S209

TRANSMIT COMMAND VALUE TO EACH STORAGE BATTERY — S211

END

*FIG. 10*

**EP 3 319 199 A1**

## INTERNATIONAL SEARCH REPORT

International application No.

PCT/JP2016/069281

**A. CLASSIFICATION OF SUBJECT MATTER**

*H02J7/00*(2006.01)i, *H01M10/44*(2006.01)i, *H01M10/48*(2006.01)i, *H02J3/32* (2006.01)i

According to International Patent Classification (IPC) or to both national classification and IPC

**B. FIELDS SEARCHED**

Minimum documentation searched (classification system followed by classification symbols)
H02J7/00, H01M10/44, H01M10/48, H02J3/32

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2014-3778 A (Hitachi, Ltd.), 09 January 2014 (09.01.2014), paragraphs [0014] to [0058]; fig. 1 to 3 (Family: none) | 1-8 |
| A | JP 2014-124063 A (Toshiba Mitsubishi-Electric Industrial Systems Corp.), 03 July 2014 (03.07.2014), paragraphs [0010] to [0047]; fig. 1 to 9 (Family: none) | 1-8 |
| A | JP 2014-39353 A (Toshiba Corp.), 27 February 2014 (27.02.2014), paragraphs [0077] to [0079]; fig. 9 & US 2014/0042978 A1 paragraphs [0086] to [0090]; fig. 9 | 1-8 |

| ☐ Further documents are listed in the continuation of Box C. | ☐ See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 05 September 2016 (05.09.16) | 13 September 2016 (13.09.16) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10322924 A